# EUROPEAN PATENT SPECIFICATION

(11) **EP 0 536 122 B1**
(45) Date of publication and mention of the grant of the patent: **16.04.1997**
(21) Application number: 90913644.2
(22) Date of filing: 04.09.1990
(51) Int. Cl.: H04Q 1/30, G08B 5/22, G08B 3/10

(54) **MESSAGE REMINDER ALERT FOR SELECTIVE CALL RECEIVER**
NACHRICHTENERINNERUNGSALARM FÜR SELEKTIVEN ANRUFEMPFÄNGER
AVERTISSEUR DE RAPPEL DE MESSAGES POUR RECEPTEUR D'APPELS SELECTIF

(30) Priority: 13.10.1989 US 421035
(43) Date of publication of application: 14.04.1993
(73) Proprietor: MOTOROLA, INC., Schaumburg, IL 60196 (US)
(72) Inventor: HENRY, Courtney, S., Forest, Virginia 24551 (US)
(74) Representative: Dunlop, Hugh Christopher
(86) International application number: PCT/US90/04967
(87) International publication number: WO 91/06186

(56) References cited:
- US-A- 4 160 240
- US-A- 4 755 816
- US-A- 4 796 024
- US-A- 4 821 021
- US-A- 4 868 561
- Telocator Magazine, March 1984, MEMO-PAGE I: "Tone and Visual Alert POCSAG Radiopager".

## Description

### Field of the Invention

This invention relates generally to electronic devices capable of receiving and storing messages such as selective call receivers and, more specifically, to a selective call receiver having a message reminder alert.

### Background of the Invention

Electronic devices such as selective call receivers including pagers typically have the ability to receive, store, and review a plurality of information messages. Depending on the particular type of pager, the information messages may comprise numeric, alphanumeric, voice, or tone-only messages. Additionally, such pagers are typically equipped with means for alerting the pager user of a received message. To facilitate user control of the reviewing of messages and the alert means, a plurality of switches may be available.

Usually, upon receipt of a new message, the message is stored in a random access memory (RAM), and an initial audible, visual, or tactile alert is provided to inform the pager user that he has received a message. The audible, visual, and tactile alert means typically comprise an audio speaker, a light, and a vibrator, respectively. In the case of a numeric or alphanumeric display pager, the received message can be displayed on a visual display through actuation of a message reading switch, or, alternatively, the message can be displayed automatically upon receipt. In a typical voice pager, received messages can be reviewed via playback on the pager's audio speaker.

Most types of pagers in the current art are capable of at least two alert modes, commonly known as a silent alert mode and an audible alert mode. Each of these alert modes comprises a combination of the visual, audible, or tactile means. The silent alert mode typically comprises a visual alert and a tactile alert. Optionally, a very brief audible chirp may also be active in the silent alert mode to improve user recognition of received selective calls.

The audible alert mode typically comprises visual and audible alerts. The audible alert is usually at the maximum audio level of which the pager's audio speaker and audio drive circuitry are capable: typically 80 db sound pressure level (SPL) at 12 inches from the pager. In voice message pagers, a volume control is typically available for adjusting the level of the audible mode audio output.

The common method for switching between the silent alert mode and the audible alert mode comprises a user-accessible manual switch located on the exterior surface of the pager. When the pager user wishes to change alert modes, he manually selects the desired mode by utilizing the switch.

In both the silent and audible alert modes, upon receipt of a message, the initial alert is given for a predetermined amount of time (typically 8 to 20 seconds). Usually, the alert can be terminated immediately by user actuation of an alert reset switch. To improve user recognition of message receipt, especially in cases where the pager and user are separated for a period of time, most modern pagers comprise a means of reminding users of any messages stored in memory that have not been read. Typically, this means comprises a periodic alert similar to the initial alert given upon receipt of the page, but for a much shorter duration relative to the initial alert. The reminder alert usually repeats every two minutes until the received message is read.

In a known voice message pager with voice storage capability, message reception and storage in the audible mode is announced by the output of a brief audible alert of a predetermined pattern through an audio speaker, immediately followed by the output of the received voice message. In the silent mode, a vibrator is activated for a predetermined amount of time and a light is illuminated continously until the received voice message is recalled from memory and reviewed by playback through the audio speaker. Thus, in this case, the continuous illumination of the light serves as the message reminder.

A common design technique in current information pagers, particularly in numeric, alphanumeric, and tone-only pagers, is the combination of the alert reset and the message reading functions into one switch, known as the read/reset switch. If a new message is received and the initial alert is allowed to time out, the reminder alert is activated until the user actuates the read/reset switch, at which time the new message is displayed and the reminder alert is disabled. If a new message is received and the read/reset switch is actuated before the alert times out, the alert is immediately reset (terminated) and the reminder alert is activated until the read/reset switch is actuated again, thereby displaying the received message and disabling the reminder alert.

The current art in this area has a shortcoming in that the reminder-disabling is automatically performed upon message reading and, therefore, there is no provision for situations where the pager user desires to be periodically reminded of a stored message that has already been read. This deficiency is especially critical when a user is busy when he receives a message and he immediately reads the message upon receipt but is not able to act upon the message until later.

Thus, what is needed is an improved message reminder alert in a selective call receiver.

More recently, pagers are known that have a code plug that is programmable for producing a memory reminder, that is, a short pip every thirty minutes to indicate the presence of a message in the memory of the pager. Disadvantageously, such pagers lack the capability of associating a separate memory reminder with each individual message in memory. Further, the memory reminder of such pagers lack a user operable switch for activating and deactivating the memory reminder. Such a pager is described in Telocator Magazine, March 1984, "SilCom Memo-Page I, Tone and Visual Alert POCSAG Radiopager".

### Summary of the Invention

Accordingly, it is an object of the present invention to provide an improved message reminder alert in a selective call receiver.

According to a first aspect of the invention there is provided a method in a selective call receiver receiving a plurality of messages, the receiver including a memory for storing the messages and an alerting device to provide an alert signal, said method comprising the steps of:receiving each message of said plurality of messages;storing each message of said plurality of messages; and being characterised by the steps of: providing said first alert signal in response to the said storing of each message of said plurality of messages; automatically deactivating said first alert signal after lapse of a preselected period of time; selectively, individually activating said reminder alert for at least one message of said plurality of messages to produce at least one chosen message; and individually providing a second alert signal, distinguishable from the first, second alert signal for each of the at least one chosen message in response to said activating of the reminder alert until the reminder alert associated with a corresponding at least one chosen message is deactivated.

According to a second aspect of the invention there is provided a selective call receiver comprising: storage means for storing a message; output means for presenting said stored message; alert means for providing a periodic alert for said stored message; characterised in that it further comprises a user operable switch for activating and deactivating said alert means, said periodic alert continuing if said user operable switch has been activated even after said stored message has been presented by said output means.

According to a further aspect of the invention there is provided a method in a selective call receiver having an output means for presenting a reminder alert signal, said method comprising the steps of: receiving a plurality of messages; storing each of said plurality of messages in one of a plurality of message storage slots; characterised by selectively, individually activating a separate reminder alert for each of at least one of said plurality of messages; and periodically presenting a reminder alert signal in response to said activating said reminder alert.

According to a yet further aspect of the invention there is provided a selective call receiver comprising: receiver means for receiving a plurality of messages; storage means for storing each of said plurality of messages; first alert means for generating an initial alert in response to each of said plurality of messages being received; output means for presenting said plurality of messages; characterised in that it further comprises: first user selectable means for providing one of said plurality of messages from said storage means to said output means and for deactivating said first alert means in response to each of said plurality of messages having been provided to said first output means;second alert means for generating a reminder alert; and second user selectable means for activating and deactivating said second alert means separately for each of said plurality of messages.

In carrying out the above and other objects of the invention in one form, there is provided a method in an electronic device comprising the steps of: receiving a message, storing the message, providing an initial alert signal in response to the storing of the message, and providing a selectable periodic reminder alert signal for the message.

### Brief Description of the Drawings

FIG. 1 is a block diagram of the selective call receiver of the preferred embodiment.

FIG. 2 is a flow diagram of the message reading and reminder alert selection processes of the preferred embodiment.

FIG. 3 is a flow diagram of the reminder alert process of the preferred embodiment.

### Detailed Description of the Invention

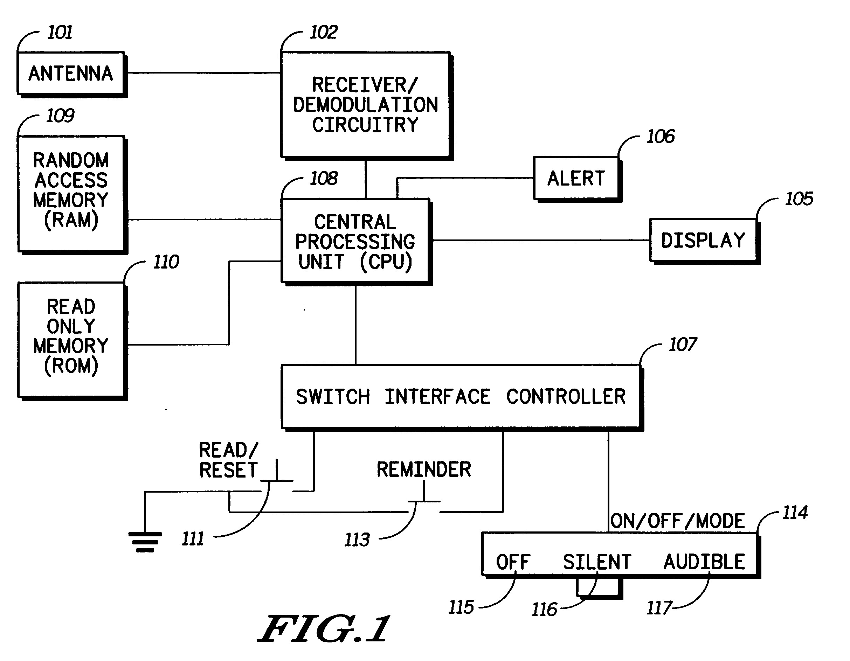

Referring to FIG. 1, a block diagram of the selective call receiver of the preferred embodiment comprises an antenna 101 for receiving radio frequency signals. The radio frequency signals are typically modulated by digital information comprised of: a) a receiver address, and b) a message. After receipt by the antenna 101, the modulated radio frequency signal is inputted to the receiver/demodulation circuitry 102, where the digital modulation is recovered. The receiver address portion of the recovered modulation is then inputted to the central processing unit (CPU) 108 where it is compared with the receiver addresses stored in the read only memory (ROM) 110. If there is a match between the recovered receiver address and any of the receiver addresses stored within the ROM 110, the recovered digital message is stored in the random access memory (RAM) 109 and the alert 106 is activated to provide an initial alert signal to inform the selective call receiver user of the received message.

The initial alert may comprise, for example, a visual, audible, or tactile means achieved through actuation of a light, speaker, or vibrating motor, respectively. The on/off/mode switch 114 is set by the user to the desired alert mode position. With the on/off/mode switch 114 in the off position 115, the selective call receiver is not operable and cannot receive any messages. In the silent position 116, the selective call receiver is in the silent mode in which messages can be received and the alert may be comprised of the visual and tactile means. Optionally, the silent mode alert may also comprise a very brief audible chirp. In the audible position 117, the selective call receiver is in the audible mode in which messages can be received and the alert may be comprised of the visual and audible means.

In both the silent and audible alert modes, the initial alert may time out after a predetermined amount of time. If the user immediately recognizes the initial alert, the read/reset switch 111 may be actuated in order to acknowledge the initial alert and reset it before timeout. In this case, a second actuation of the read/reset switch 111 will cause the newest (most recently received) message in the RAM 109 to be presented on an output means comprising the display 105. This second actuation of the read/reset switch thus comprises an acknowledgement by the user that he has read the message. Further actuations of the read/reset switch 111 will result in the successive output and presentation on the display 105 of stored messages in a new-to-old (last in-first out) order.

Actuation of the reminder switch 113 will activate a reminder alert for a displayed message if the displayed message does not currently have the reminder alert active. Actuation of the reminder switch 113 will deactivate the reminder alert for a displayed message if the displayed message currently has the reminder alert active. A selectable reminder alert is thus available for each of the messages stored in the RAM 109. Alternatively, the reminder alert could be activated and deactivated by a switch actuation sequence involving the read/reset switch 111 and/or the on/off/mode switch 114. In this case, the reminder switch 113 could be eliminated.

The reminder alert may comprise a periodic very brief (relative to the initial alert duration) visual, audible, or tactile alert for the purpose of reminding the user to read or react to selected ones of the messages stored in the RAM 109. The exact period of the reminder alert may be predetermined and may be programmed into the ROM 110, or may be selectable by the user through a menu stored in the RAM 109 and selectively displayed on the display 105. Alternately, selective call receivers that have a real time clock (RTC) could have a means of setting the reminder alert to occur at (a) particular time(s) of day. After the initial brief visual, audible, or tactile reminder alert, the stored messages for which the reminder alert is active are displayed in new-to-old (last in-first out) order.

Once the reminder alert is activated for a particular message, it will continue at the selected period independent of the actuation of the read/reset switch 111 and independent of the receipt, storage, and alerting for subsequently received messages until it is deactivated by actuation of the reminder switch 113 while the particular message is displayed.

Alternatively, for a voice message pager with storage capability, the selectable message reminder could comprise brief activation of a visual, audible, or tactile alert. Immediately following the brief reminder alert, the messages for which the reminder alert is active would be played back in new-to-old (last in-first out) order. Similar to the foregoing case, the reminder alert could be selectively activated/deactivated for a particular message by actuation of the reminder switch 113 during the review of the message.

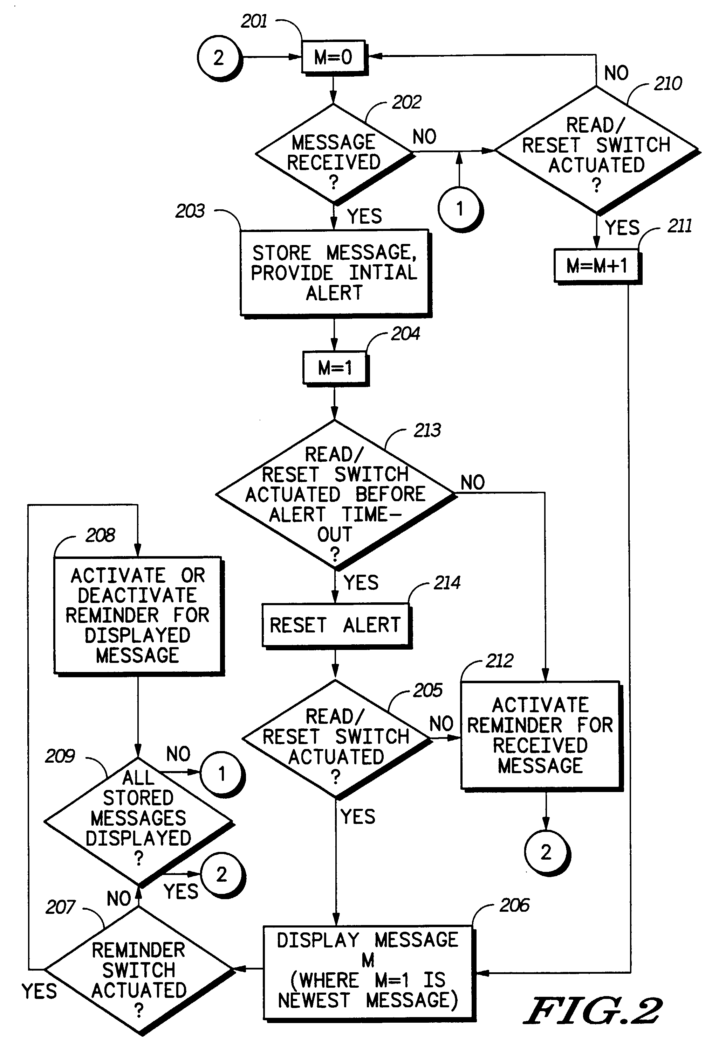

Referring to FIG. 2, a flow diagram of the message reading and reminder alert selection processes begins with a message counter represented by the letter "M" being set to zero, step 201, where M=1 represents the newest, most recently received message in memory. If no message is received in step 202, the process enters a loop comprised of steps 210, 201, and 202 which continues until a message is received or until the read/reset switch 111 is actuated. If a message is received in step 202, the message is stored in the RAM 109 and an initial alert is provided through the alert 106 in an alert mode determined by the setting of the on/off/mode switch 114, step 203. The message counter is then set to one, step 204, and a check is made to see if the read/reset switch 111 is actuated before alert time-out, step 213.

If the read/reset switch 111 is not actuated in step 213, the reminder alert is automatically activated for the received message, step 212, and the process reverts back to step 201. If the read/reset switch 111 is activated in step 213, the alert is reset, step 214, and the process proceeds to step 205 in which the read/reset switch is checked for actuation. If the read/reset switch 111 is not actuated in step 205, the reminder alert is automatically activated for the received message, step 212, and the process reverts back to step 201. If the read/reset switch is actuated in step 205, the reading of the message by the user is thus acknowledged and the process proceeds to step 206 where the Mth message is displayed on the display 105, which is, in this case, the M=1 (most recently received) message. The process then proceeds to step 207.

If the reminder switch is not actuated in step 207, the process proceeds directly to step 209, which comprises a check to see if all stored messages have been displayed. If it is found in step 209 that all of the stored messages have been displayed, the process reverts back to step 201. If it is found in step 209 that all of the stored messages have not been displayed, the process reverts back to step 210. If the read/reset switch 111 is not actuated in step 210, the process reverts back to step 201. If the read/reset switch 111 is actuated in step 210, the process proceeds to step 211, in which the message counter is incremented by one (i.e., M=M+1), and the process continues to step 206.

If the reminder switch 113 is actuated in step 207, the reminder alert is activated or deactivated for the currently displayed message, step 208. The reminder alert will be activated in step 208 for a displayed message that currently has the reminder alert inactive and the reminder alert will be deactivated in step 208 for a displayed message that currently has the reminder alert active. A selectable reminder alert for each of the messages stored in the RAM 109 is thus provided. The process then proceeds to step 209.

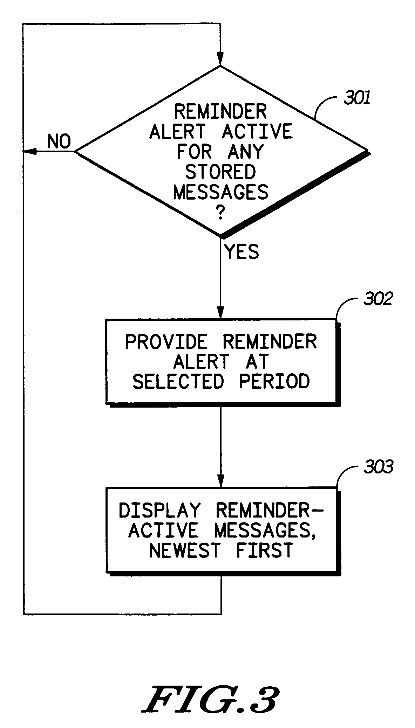

Referring to FIG. 3, a flow diagram of the reminder alert process begins with a check to see if the reminder alert is active for any of the stored messages in the RAM 109, step 301. If the reminder alert is not active for any of the stored messages, the process remains at step 301. If, in step 301, it is found that the reminder alert is active for any of the stored messages, the process proceeds to step 302, in which a reminder alert is provided through the alert 106 at a period (or at specific times) that is selected as described in the foregoing. In step 303, immediately following the reminder alert, the stored messages with the reminder alert active are displayed successively in new-to-old order (last in-first out), and the process returns to step 301.

## Claims

1. A method for use in a selective call receiver receiving a plurality of messages, the receiver including a memory for storing the messages and an alerting device to provide an alert signal, said method comprising the steps of:
receiving each message of said plurality of messages;
storing each message of said plurality of messages; and
being characterised by the steps of:
providing a first alert signal in response to the said storing of each message of said plurality of messages;
automatically deactivating said first alert signal after lapse of a preselected period of time;
selectively, individually activating a reminder alert for at least one message of said plurality of messages to produce at least one chosen message; and
individually providing a second alert signal, distinguishable from the first, for each of the at least one chosen message in response to said activating of the reminder alert until the reminder alert associated with a corresponding at least one chosen message is deactivated.

2. The method according to claim 1 wherein said deactivating said first alert signal step comprises displaying each message.

3. The method according to claim 1 wherein said activating step comprises the step of selecting a period for said second alert signal.

4. The method according to claim 1 wherein said activating step comprises presenting each message on a display (105).

5. The method according to claim 1 in which said second alert signal is provided for each message independently of said first alert signal.

6. A selective call receiver comprising:
storage means (109) for storing a message;
output means for presenting said stored message;
alert means (106) for providing a periodic alert for said stored message; characterised in that it further comprises:
a user operable switch (113) for activating and deactivating said alert means, said periodic alert continuing if said user operable switch has been activated even after said stored message has been presented by said output means.

7. The selective call receiver according to claim 6, said output means comprising a visual display (105).

8. A method for use in a selective call receiver having an output means for presenting a reminder alert signal, said method comprising the steps of:
receiving a plurality of messages;
storing each of said plurality of messages in one of a plurality of message storage slots (109); characterised by
selectively, individually activating a separate reminder alert for each of at least one of said plurality of messages; and
periodically presenting a reminder alert signal in response to said activating said reminder alert.

9. The method of claim 8 wherein said step of activating comprises the steps of:
presenting said at least one of said plurality of messages; and
activating a first user selectable control (113).

10. The method of claim 8 further comprising the steps of:
deactivating said reminder alert for at least one of said plurality of messages; and
not presenting said reminder alert signal if said reminder alert has been deactivated or not activated for all of said plurality of messages.

11. The method of claim 10 wherein said step of deactivating comprises the steps of:
presenting said at least one of said plurality of messages; and
activating a first user selectable control (113).

12. A selective call receiver comprising:
receiver means (102) for receiving a plurality of messages;
storage means (109) for storing each of said plurality of messages;
first alert means (106) for generating an initial alert in response to each of said plurality of messages being received;
output means (105) for presenting said plurality of messages; characterised in that it further comprises
first user selectable means (111) for providing one of said plurality of messages from said storage means to said output means and for deactivating said first alert means in response to each of said plurality of messages having been provided to said first output means;
second alert means (106) for generating a reminder alert; and
second user selectable means (113) for activating and deactivating said second alert means separately for each of said plurality of messages.

## Patentansprüche

1. Verfahren zur Verwendung in einem Selektivrufempfänger, der eine Mehrzahl von Nachrichten empfängt, wobei der Empfänger einen Speicher zum Speichern der Nachrichten und eine Alarmeinrichtung zum Erzeugen eines Alarmsignals enthält, wobei das Verfahren die Schritte umfaßt:
Empfangen jeder Nachricht der Mehrzahl von Nachrichten;
Speichern jeder Nachricht der Mehrzahl von Nachrichten
und gekennzeichnet ist durch die Schritte:
Erzeugen eines ersten Alarmsignals als Reaktion auf das Speichern jeder Nachricht der Mehrzahl von Nachrichten;
automatisch Deaktivieren des ersten Alarmsignals nach Ablauf einer vorgewählten Zeitdauer;
selektiv einzeln Aktivieren eines Erinnerungsalarms für wenigstens eine Nachricht der Mehrzahl von Nachrichten, um wenigstens eine ausgewählte Nachricht hervorzubringen, und
einzeln Erzeugen eines zweiten von dem ersten unterscheidbaren Alarmsignals für jede der wenigstens einen ausgewählten Nachricht als Reaktion auf das Aktivieren des Erinnerungsalarms, bis der mit einer entsprechenden wenigstens einen ausgewählten Nachricht verbundene Erinnerungsalarm deaktiviert wird.

2. Verfahren nach Anspruch 1, bei dem der Schritt des Deaktivierens des ersten Alarmsignals das Anzeigen jeder Nachricht umfaßt.

3. Verfahren nach Anspruch 1, bei dem der Aktivierungsschritt den Schritt zum Auswählen einer Periode für das zweite Alarmsignal umfaßt.

4. Verfahren nach Anspruch 1, bei dem der Aktivierungsschritt das Präsentieren jeder Nachricht auf einer Anzeige (105) umfaßt.

5. Verfahren nach Anspruch 1, bei dem das zweite Alarmsignal für jede Nachricht unabhängig von dem ersten Alarmsignal erzeugt wird.

6. Selektivrufempfänger, umfassend:
eine Speichereinrichtung (109) zum Speichern einer Nachricht;
eine Ausgabeeinrichtung zum Präsentieren der gespeicherten Nachricht;
eine Alarmeinrichtung (106) zum Erzeugen eines periodischen Alarms für die gespeicherte Nachricht, dadurch gekennzeichnet, daß er weiter umfaßt:
einen benutzerbedienbaren Schalter (113) zum Aktivieren und Deaktivieren der Alarmeinrichtung, wobei der periodische Alarm andauert, wenn der benutzerbedienbare Schalter aktiviert worden ist, auch nachdem die gespeicherte Nachricht durch die Ausgabeeinrichtung präsentiert worden ist.

7. Selektivrufempfänger nach Anspruch 6, bei dem die Ausgabeeinrichtung eine Sichtanzeige (105) umfaßt.

8. Verfahren zur Verwendung in einem Selektivrufempfänger mit einer Ausgabeeinrichtung zum Präsentieren eines Erinnerungs-Alarmsignals, wobei das Verfahren die Schritte umfaßt:
Empfangen einer Mehrzahl von Nachrichten;
Speichern jeder der Mehrzahl von Nachrichten in einem einer Mehrzahl von Nachrichtenspeicherschlitzen (109), gekennzeichnet durch
selektiv einzeln Aktivieren eines getrennten Einnerungsalarms für jede von wenigstens einer der Mehrzahl von Nachrichten und
periodisch Präsentieren eines Erinnerungs-Alarmsignals als Reaktion auf das Aktivieren des Erinnerungsalarms.

9. Verfahren nach Anspruch 8, bei dem der Schritt des Aktivierens die Schritte umfaßt:
Präsentieren der wenigstens einen der Mehrzahl von Nachrichten und
Aktivieren einer ersten benutzerwählbaren Steuerung (113).

10. Verfahren nach Anspruch 8, weiter umfassend die Schritte:
Deaktivieren des Erinnerungsalarms für wenigstens eine der Mehrzahl von Nachrichten und
nicht Präsentieren des Erinnerungs-Alarmsignals, wenn der Erinnerungsalarm deaktiviert worden ist oder nicht für alle der Mehrzahl von Nachrichten aktiviert worden ist.

11. Verfahren nach Anspruch 10, bei dem der Schritt des Deaktivierens die Schritte umfaßt:
Präsentieren der wenigstens einen der Mehrzahl von Nachrichten und
Aktivieren einer ersten benutzerwählbaren Steuerung (113).

12. Selektivrufempfänger, umfassend:
eine Empfängereinrichtung (102) zum Empfangen einer Mehrzahl von Nachrichten;
eine Speichereinrichtung (109) zum Speichern jeder der Mehrzahl von Nachrichten;
eine erste Alarmeinrichtung (106) zum Erzeugen eines anfänglichen Alarms als Reaktion auf jede der Mehrzahl von Nachrichten, die empfangen wird;
eine Ausgabeeinrichtung (105) zum Präsentieren der Mehrzahl von Nachrichten, dadurch gekennzeichnet, daß er weiter umfaßt:
eine erste benutzerwählbare Einrichtung (111) zum Anlegen einer der Mehrzahl von Nachrichten aus der Speichereinrichtung an die Ausgabeeinrichtung und Deaktivieren der ersten Alarmeinrichtung als Reaktion auf jede der Mehrzahl von Nachrichten, die an die erste Ausgabeeinrichtung angelegt worden ist;
eine zweite Alarmeinrichtung (106) zum Erzeugen eines Erinnerungsalarms und
eine zweite benutzerwählbare Einrichtung (113) zum Aktivieren und Deaktivieren der zweiten Alarmeinrichtung getrennt für jede der Mehrzahl von Nachrichten.

## Revendications

1. Procédé pour utilisation dans un récepteur d'appel sélectif recevant une pluralité de messages, ledit récepteur comportant une mémoire destinée à enregistrer les messages et un dispositif d'alarme pour fournir un signal d'alarme, ledit procédé comprenant les étapes consistant à :
recevoir chaque message de ladite pluralité de messages ;
enregistrer chaque message de ladite pluralité de messages ; et étant caractérisé par les étapes consistant à :
fournir un premier signal d'alarme en réponse audit enregistrement de chaque message de ladite pluralité de messages ;
désactiver automatiquement ledit premier signal d'alarme après l'écoulement d'une période de temps présélectionnée ;
activer individuellement et de manière sélective une alarme de rappel pour au moins un message de ladite pluralité de messages pour produire au moins un message choisi ; et
fournir individuellement un deuxième signal d'alarme, distinct du premier, pour chacun des messages choisis au nombre d'au moins un, en réponse à ladite activation de l'alarme de rappel, jusqu'à ce que l'alarme de rappel associée à un message choisi correspondant au nombre d'au moins un soit désactivée.

2. Procédé suivant la revendication 1, dans lequel ladite désactivation de ladite première étape de signal d'alarme comprend l'affichage de chaque message.

3. Procédé suivant la revendication 1, dans lequel ladite étape d'activation comprend l'étape de sélection d'une période pour ledit deuxième signal d'alarme.

4. Procédé suivant la revendication 1, dans lequel ladite étape d'activation comprend la présentation de chaque message sur un afficheur (105).

5. Procédé suivant la revendication 1, dans lequel ledit deuxième signal d'alarme est fourni pour chaque message indépendamment dudit premier signal d'alarme.

6. Récepteur d'appel sélectif comprenant :
un moyen d'enregistrement (109) pour enregistrer un message ;
un moyen de sortie pour présenter ledit message enregistré ;
un moyen d'alarme (106) pour fournir une alarme périodique pour ledit message enregistré ; caractérisé en ce qu'il comprend en outre
un commutateur (113) pouvant être actionné par l'utilisateur pour activer et désactiver ledit moyen d'alarme, ladite alarme périodique continuant si ledit commutateur pouvant être actionné par l'utilisateur a été activé même après que ledit message enregistré a été présenté par ledit moyen de sortie.

7. Récepteur d'appel sélectif suivant la revendication 6, dans lequel ledit moyen de sortie comprend un afficheur visuel (105).

8. Procédé pour utilisation dans un récepteur d'appel sélectif, comportant un moyen de sortie pour présenter un signal d'alarme de rappel, ledit procédé comprenant les étapes consistant à :
recevoir une pluralité de messages ;
enregistrer chacun de ladite pluralité de messages dans l'une d'une pluralité de tranches d'enregistrement (109) de messages ; caractérisé par
l'activation individuelle et sélective d'une alarme de rappel séparée pour chacun des messages de ladite pluralité de messages, au nombre d'au moins un ; et présenter périodiquement un signal d'alarme de rappel en réponse à ladite activation de ladite alarme de rappel.

9. Procédé suivant la revendication 8, dans lequel ladite étape d'activation comprend les étapes consistant à :
présenter ledit message au nombre d'au moins un de ladite pluralité de messages ; et
activer une première commande pouvant être sélectionnée par l'utilisateur (113).

10. Procédé suivant la revendication 8, comprenant en outre les étapes consistant à :
désactiver ladite alarme de rappel pour au moins l'un de ladite pluralité de messages ; et
ne pas présenter ledit signal d'alarme de rappel si ladite alarme de rappel a été désactivée ou non activée pour la totalité de ladite pluralité de messages.

11. Procédé suivant la revendication 10, dans lequel ladite étape de désactivation comprend les étapes consistant à : présenter ledit message au nombre d'au moins un de ladite pluralité de messages ; et
activer une première commande pouvant être sélectionnée par l'utilisateur (113).

12. Récepteur d'appel sélectif comprenant :
un moyen récepteur (102) pour recevoir une pluralité de messages ;
un moyen d'enregistrement (109) pour enregistrer chacun de ladite pluralité de messages ;
un premier moyen d'alarme (106) pour générer une alarme initiale en réponse à chacun de ladite pluralité de messages reçus ;
un moyen de sortie (105) pour présenter ladite pluralité de messages ; caractérisé en ce qu'il comprend en outre :
un premier moyen (111) pouvant être sélectionné par l'utilisateur pour fournir l'un de ladite pluralité de messages à partir dudit moyen d'enregistrement et à destination dudit moyen de sortie, et pour désactiver ledit premier moyen d'alarme en réponse au fait que chacun de ladite pluralité de messages a été fourni audit premier moyen de sortie ;
un deuxième moyen d'alarme (106) pour générer une alarme de rappel ; et
un deuxième moyen (113) pouvant être sélectionné par l'utilisateur pour activer et désactiver ledit deuxième moyen d'alarme séparément pour chacun de ladite pluralité de messages.
